# EUROPEAN PATENT APPLICATION

(11) **EP 2 477 145 A1**
(43) Date of publication of application: **18.07.2012**
(21) Application number: 12151217.2
(22) Date of filing: 16.01.2012
(51) Int. Cl.: G06Q 10/06, G06Q 10/10

(54) **Partial-order planning framework based on timelines**

(30) Priority: 17.01.2011 US 201113007809
(71) Applicant: Palo Alto Research Center Incorporated, Palo Alto, California 94304 (US)
(72) Inventor: Do, Minh Binh, Palo Alto, CA 94306 (US)
(74) Representative: Skone James, Robert Edmund

(57) **Abstract**

An on-line partial order planning system and method that represents variables in an environment for which a plan is being developed in the form of a plurality of timelines formed as a set of timelines. At a starting point, the set of timelines are an inconsistent set of timelines, and the system and method systematically refine the timelines until the timeline set becomes consistent.

## Description

This disclosure relates generally to a method and system for timeline-based planning and scheduling. More specifically the disclosure relates to the on-line state-space planning of operations and actions in order to achieve pre-defined goals.

Planning is directed to the problem of finding a sequential or parallel sequence of actions that when executed from a known initial state achieves all pre-defined goals. There are many different methods of planning used in various applications, e.g. academic planners that are normally offline and deterministic planners where relevant planning data is known. The input to a deterministic planning system consists of a set of variables, a set of actions, the initial state, and the desired goal condition. Each action is represented by its lists of conditions and effects. Conditions are constraints on variables that need to be satisfied for the action to be executed. The planner finds a logically consistent sequence of actions (a plan) that connects the initial state to the goal state. The planner does not account for issues such as: (1) if variables are affected by actions outside of the planner's control (e.g., by actions from another plan being executed); (2) how variables may change values during the planning time needed to find the plan; and (3) new goals arriving in real-time. These issues are associated with online planning, where the planner must account for the passing of time.

In continual on-line planning, goals and system (or world) state are continually updated over time to account for plan executions of previously planned for goals that overlap with the planning process. Current online planners known in the art use domain-specific guidance techniques to guide the planner, making it time-consuming to adapt to new applications. These limitations make it difficult to develop a traditional action-based general-purpose planning heuristic to guide the search for a plan.

An on-line partial order planning system and method that represents variables in an environment for which a plan is being developed in the form of a plurality of timelines formed as a set of timelines. At a starting point, the set of timelines are an inconsistent set of timelines, and the system and method systematically refine the timelines until the timeline set becomes consistent.

### BRIEF DESCRIPTION OF THE DRAWINGS

Figure 1 is a schematic diagram of the components, inputs, and outputs of a continual online planner;

Figure 2 is a schematic diagram of the steps required to move a package from one location to another;

Figure 3 provides timelines for several variables modified in the example depicted in Figure 2;

Figure 4 is a flow diagram modeling how the planner operates on timelines;

Figure 5 is a flow diagram describing how the forward state space planner determines a plan;

Figure 6 provides three timelines representing three variables in three iterations of the forward state space planner searching for a valid plan;

Figure 7 is a flow diagram describing how a partial order planner determines a plan;

Figure 8 provides three timelines representing three variables in three iterations of the partial order planner determining a valid plan.

### DETAILED DESCRIPTION

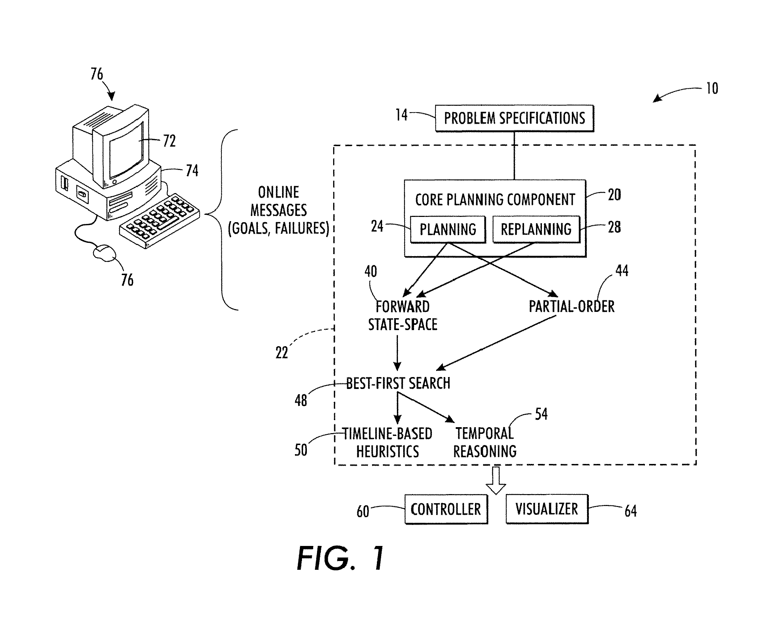

Figure 1 outlines the overall framework of a continual online planner with the core planning component 20 within the planner 22. The core planning component 20 receives problem specifications 14 and online messages 18 as input. For the core planning component 20, there are two main components, a Planning component 24 and a Replanning component 28 that can call different planning algorithms 40, 44, search algorithms 48, and reasoning engines 50, 54. The output from the core planning component 20 is sent to a controller 60 and/or visualizer 64, where the controller can send signals to cause the plan to be implemented.

The planner 22 is suitably embodied as operating within a digital processing device or system, such as an illustrative computer 70, executing suitable software, firmware, or other instructions. The digital processing device includes suitable user interfacing components such as to receive the on-line messages 18 and to output instructions/data to controller 60, visualizer 64 - in the case of the illustrative computer 70, these include an illustrative display device 74 providing visual output (and, if embodied as a "touch screen", optionally also providing for user input), an illustrative keyboard 74, and an illustrative mouse 76 (or a trackball, track pad, or other pointing device). Instead of the illustrative computer 70, the planner system can be embodied by another digital processing device such as a network server, a personal data assistant (PDA), a laptop or notebook computer, a tablet device such as an iPad (available from Apple Corporation, Cupertino, CA, USA), or so forth. In a portable system, wireless connectivity is suitably used.

It is also to be appreciated that the planner 22 may be embodied by a storage medium storing instructions executable by a digital processing device to implement the valuation system. By way of illustrative example, the storage medium may be a hard disk (not shown) of the computer 70 or some other magnetic storage medium, or an optical disk or other optical storage medium, or random access memory (RAM, not illustrated) of the computer 70 or FLASH memory or some other electronic storage medium, or so forth.

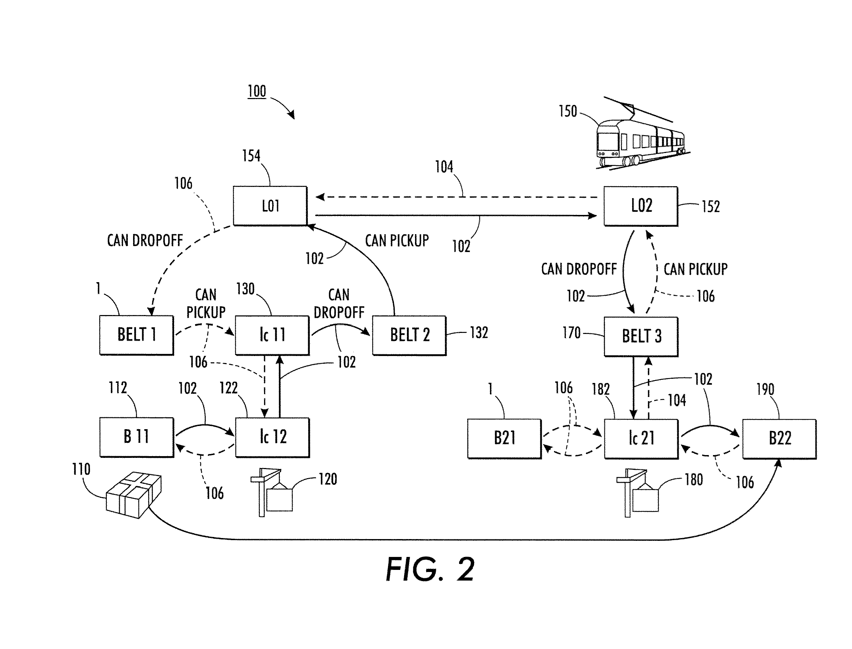

Figure 2 presents an environment 100 in which an example planning scenario is illustrated to show the different possible variables and interrelations between the variables to which the concepts of the present application may be applied. In the environment 100, a package 110 is located at *B*1₁ 112 and needs to be to delivered to *B*2₂ 190 using first crane 120 located at *LC*1₂ 122. Solid arrow lines 102 show the path of the package 110. The package 110 is first moved using the first crane 120 to location *LC*1₁ 130 and then to *Belt*₂ 132. The package 110 is then transported by overhead vehicle (*OHV*) 150 from *L*0₁ 154 to *L*0₂ 152. The package 110 is next transferred onto *Belt*₃ 170 and from *Belt*₃ 170 by second crane 180 located at *LC*2₁ 182 to location *B*2₂ 190. Note that there are actions represented by solid lines 104 belonging to the final plan that are not represented by the path of the package, such as moving the *OHV* 150 from *L*0₂ 152 to *L*0₁ 154 and the second crane from *LC*2₁ 182 to *Belt*₃ 170. The remaining dotted lines 106 represent available actions that are not part of the described path.

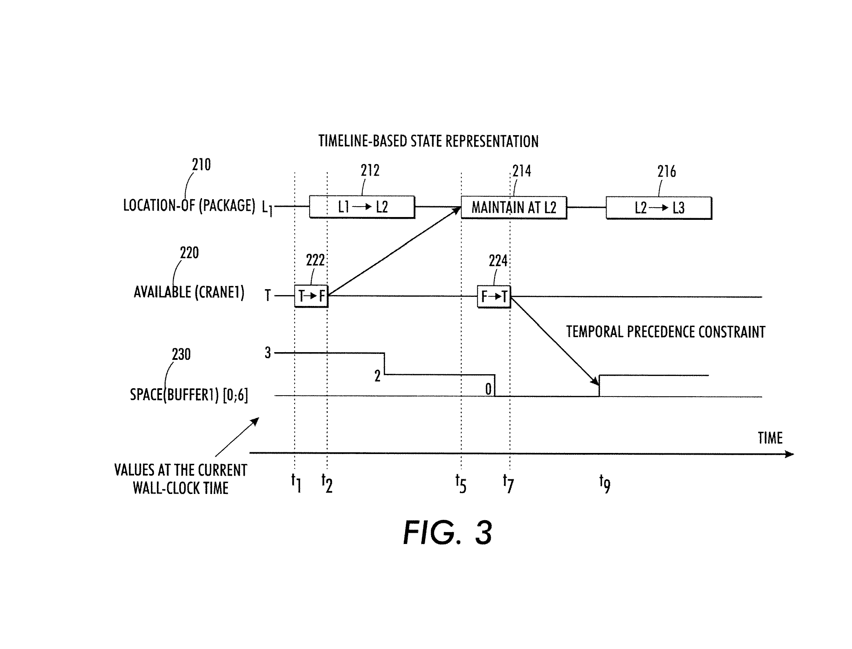

Timelines for several variables modified in the example depicted in Figure 2 are displayed in Figure 3. The variables represented are: (1) a multi-value (discrete) variable *v*1 = *LocationOf*(*Package*) 210 representing the location of *Package*; (2) a binary variable *v*₂ = *Available*(*Crane1*) 220 representing if *Crane1* is carrying a package; (3) a continuous variable *v*₃ = *Space(Belt2)* 230 representing the available/empty space in *Belt2.* It is to be understood a binary variable is a special case of a discrete multi-value variable (i.e., with only two values). Also, while only three types of variables are described above, other variables may be included in the timeline set managed by a planner.

Each timeline for a variable *v* consists of a value *cᵥ* ∈ *D*(*v*), with *D*(*v*) being the value domain of *v*, which contains all possible values of v. The timeline for v consists of the current value of *v* at the current wall-clock time *t_{c}* and a set of *tokens* representing future events affecting the value of *v*. The tokens are added due to actions in the plans found for previous goals. The three tokens 212, 214, 216 depicted in Figure 3 in the timeline for *v*₁ = *LocationOf*(*Package*) 210 represent the following ordered events: (1) the value of *v*₁ changing from the current value *v*₁ = *L*₁ to *v*₁ = *L*₂ 212; (2) maintaining the value *v*₁ *= L*₂ for a certain duration 214 defined by the start and end time points of the token; and (3) changing the value from *v*₁ = *L*₂ to *v*₁ = *L*₃ during 216. The two tokens 222, 224 depicted in the timeline for *v*₂ = *Available(Cranel)* 220 represent the changing availability *Crane1* of represented by the value of the binary variable changing from true to false during 222 and from false back to true during 224.

Each token *tk* is represented by:
(i) Start and end time points *start*(*tk*) and *end*(*tk*).
(ii) A start value *v*ₛ (or bounds on start value [*lb*; *ub*] with *lb* ≤ *ub* for continuous variables).
(iii) A start condition (e.g., *v* = *vₛ*) specifying the condition that needs to be satisfied by the token (e.g. =, ≠, >, <, ≥, ≤, *NONE*)*.*
(iv) A change operation (*operator, value*) (e.g., *v* = *v* + 5 or *v* ← *x*) specifying how the variable value changed within the token duration. Some change operators are: :=, +=, -=, x=, /=, *CHANGE, USE, MAINTAIN.* The variable value at the end of the token is calculated based on the start value and the change operation. Alternatively, the start and end values can be represented explicitly and the change operation calculated based on the start and end values.

Given that tokens represent conditions and changes caused by actions, there can be temporal relations between tokens that represent either: (1) an execution condition or effect of the same action a ; or (2) a condition or effect of actions that are related to one another. For example, before moving the package from *L*₁ to *L*₂ using Crane1, it first needs to be loaded. Thus, tokens caused by load action need to finish before the tokens added by the move action. Therefore, there are temporal ordering relations between the tokens. In a valid plan, temporal relations between all tokens within a timeline and between timelines for all variables are consistent.

The set of timelines for all variables is consistent if each timeline is:
(i) *value consistent.* A timeline is value consistent if consecutive tokens on the same timeline make up a consistent sequence of changes, *i.e.* the end value of a given token *matches* with the start value of the next token. In *matching,* we generally mean equal, however for continuous variables that are represented by a [*lb*,*ub*] interval, matching means that the two intervals overlap. If a given token *tk* 's start value is not matched by a previous token's end value, we say that *tk* is not supported. A timeline is consistent when all tokens in that timeline are supported.
(ii) *temporal consistent.* Tokens that are added to the timeline should not cause temporal inconsistency. One example of temporal inconsistency is that two temporal orderings: *t*₁ < *t*₂ and *t*₂ < *t*₁ are both deducible from the same network.

A valid plan must achieve the desired goal or set of goals. For a given goal *g* = ?(*v_{g},x*) (i.e., *v_{g}* = *x*), a consistent timeline for *v_{g}* achieves the desired goal, if at the end of the timeline the end value of the last token matches *x*. Alternatively, we say that the timeline achieves *g* at some point in time if there exist a token *T* such that the end value of *T* matches *x* . For a given goal set *G* , if for all *g* ∈ *G* a consistent timeline for *v_{g}* satisfies *g* then we say that set of timelines TL for all variables satisfy G or *TL* ⊨*G* .

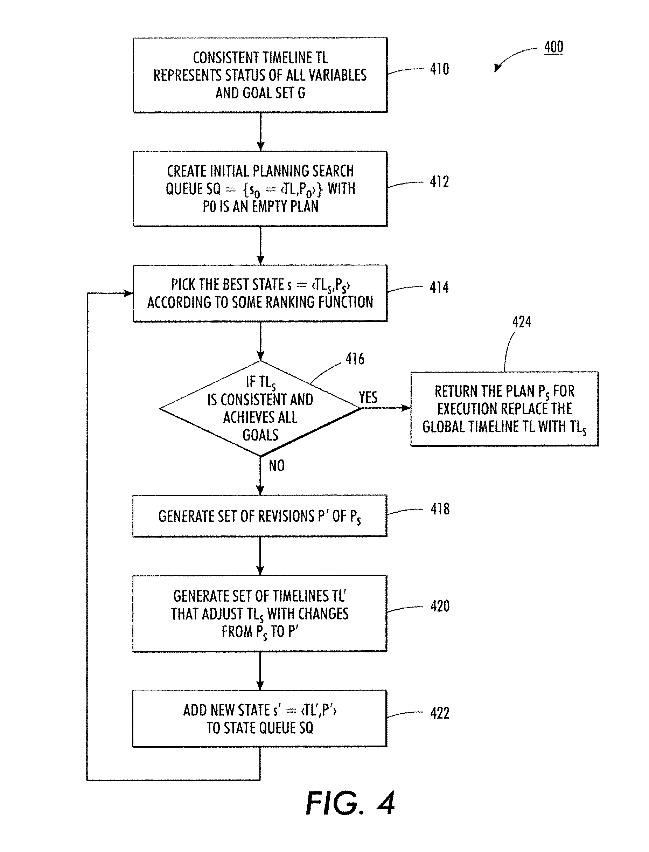

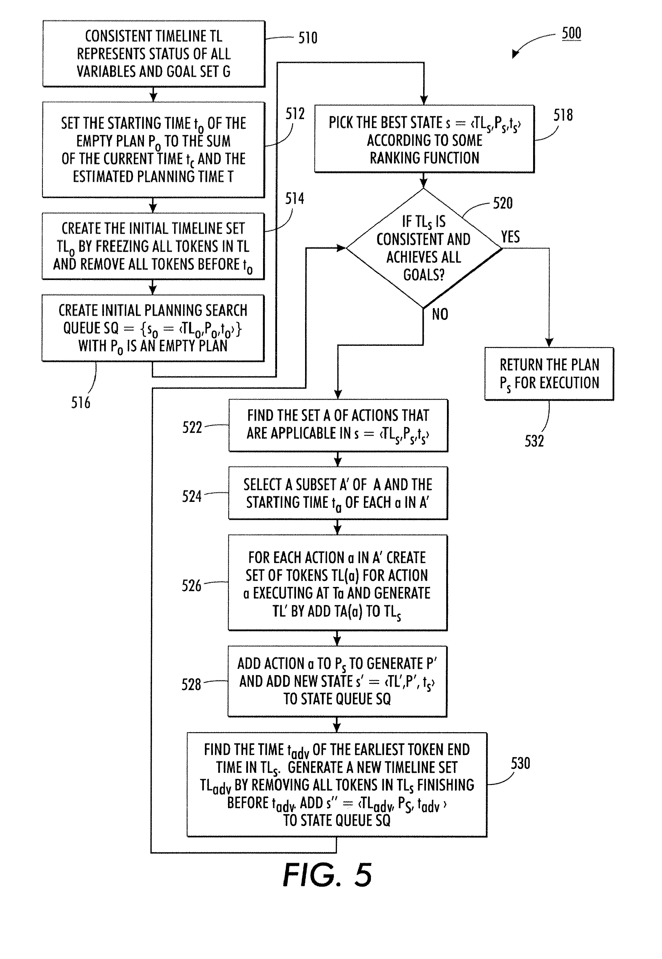

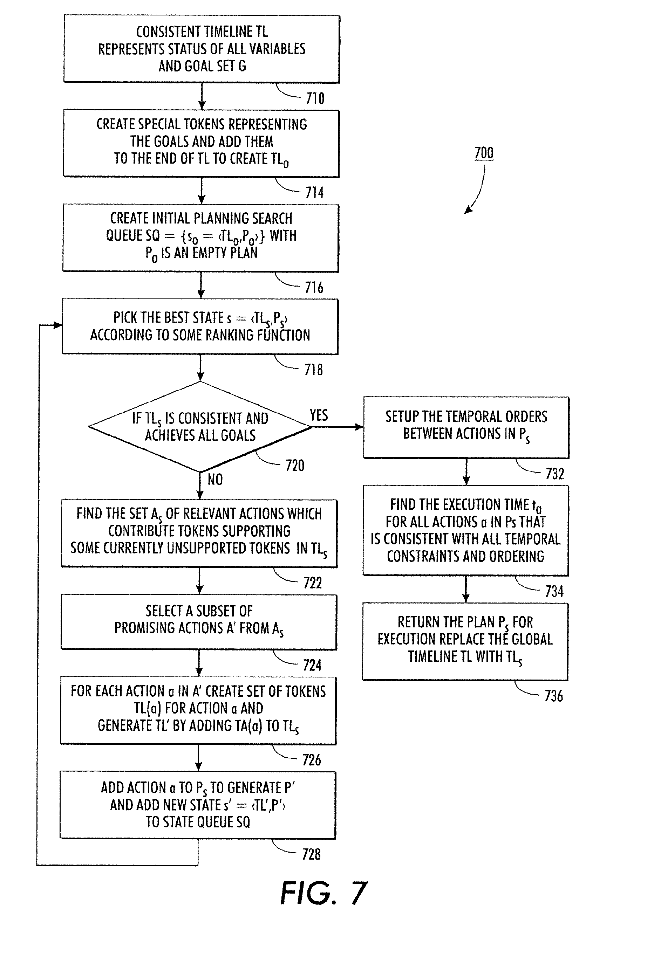

Figure 4 demonstrates, by flow 400, how the general planning algorithm operates on timelines. Some notations used in Figure 4, and subsequent Figures 5 and 7, are:
(i) For a given action *a* , *T*(*a*) denotes the set of tokens caused by *a* .
(ii) For an action set *A*, *T*(*A*) is the set of tokens caused by all actions in *A*.
   Similarly, *T*(*P*) is the set of tokens caused by all actions in the plan *P* .
(iii) For each time point *tp* (e.g., a token's start/end timepoint), let *est*(*tp*) and *lst*(*tp*) represent the earliest and latest possible times that *tp* can occur.

The planner takes as an input 410 a consistent timeline set *TL*, representing all changes happening from the current wall-clock time to all state variables, and a goal set G . The planner attempts to find a plan P such that (1) adding *T*(*P*) to *TL* does not cause any inconsistency, (2) achieves all goals, and (3) is executable (i.e., all tokens caused by this plan should be able to start after the wall-clock time when the plan is found) 424. To achieve this, the planner starts with an empty plan 412 and continually generates revisions until a valid plan is found. It does so by maintaining a queue (SQ) of plan states, each containing a potential incomplete plan P and the corresponding timeline containing tokens representing actions in P. SQ is initialized with an empty plan and the current timelines at the planning time 412. The planner then picks the best state s = <TLₛ,Pₛ> from the queue according to the objective function of the planning process in 414. If, in 416, the state contains a consistent plan Pₛ, then it is returned for execution 424. If not, then the planner will create zero or more revisions P' of the partial plan Pₛ in 418. It also generates the corresponding timeline set TL' for each new P' in 420. The new states combining newly generated plans P' and timelines TL' are, in 422, put back into the state queue SQ and the process is repeated back to 414.

The concepts of the above described Figure 4 are expanded upon in connection with Algorithm 1 below. Where, as discussed above, the planner starts with a consistent timeline set and needs to find a plan that does not cause any inconsistencies, achieve the stated goals and is executable. Therefore, after initialization (lines 1-7), the planner starts with the empty plan set and keeps revising the plan until achieving the noted objectives (lines 8-11 }. The planner tries to find the *best* plan by maintaining a set of generated states (which is composed of a plan P and the timelines which resulted from adding tokens caused by P, to the original timelines), and at each step the process picks the best from the generated set to check for being a valid plan. Thus, if a generated plan is a valid one, it may not be returned unless it is better than other generated plans. When the best plan P is found, P is executed (line 12) and its effect is incorporated in the continually maintained timelines (line 13).

It is to be understood that the above algorithm is sufficiently general to capture both systematic and local-search style planning for different plan representations, and for different planners that can handle different sets of variables and constraints. In that regard, the specific revising of P; determining what is the best plan; and the representation of the plan during the planning process can and will vary dependent upon particular implementations. So, in one embodiment, for example, "best" is understood to be the plan that meets more of the predetermined criteria (e.g. shortest execution time, lowest total execution cost) than other potential plans.

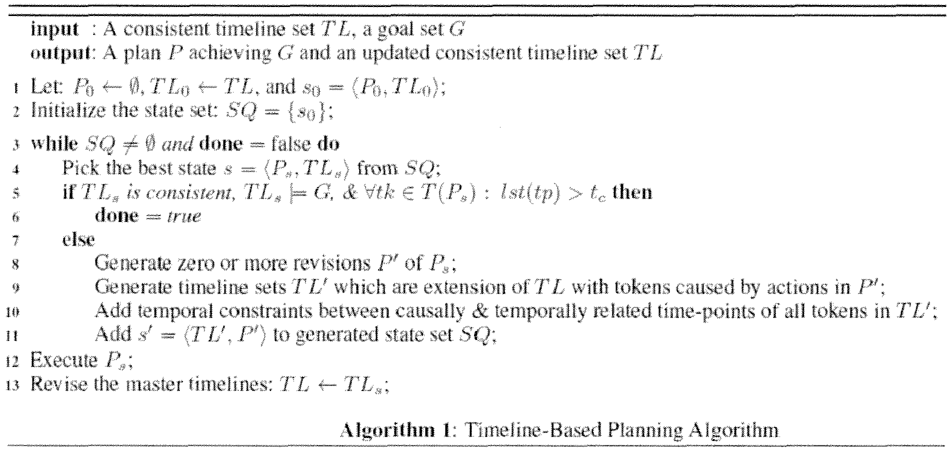

Turning now to implementing forward state-space (FSS) planners on a timeline, it is understood FSS planners search for a plan by moving forward through time. FSS planners start with an empty plan and gradually add actions at some fixed wall-clock time to the end of the currently expanding partial plan. This process is repeated until the final sequence of actions satisfies the defined goals. Thus, during the planning process, all actions in the partial plans and the tokens introduced by them are constrained to happen at some fixed wall-clock time. This set of constraints and the fact that FSS planners move forward, therefore not considering actions happening before a given time-stamp, simplifies plan state representation and reduces the branching factor compared to other algorithms.

A flow diagram 500 representing the operations performed by the FSS planner is shown in Figure 5. Similar to the planner described in figure 4, the FSS planner begins with an empty plan 510 and takes as an input a consistent timeline set and a goal set. Unlike the planner in figure 4, the FSS planner must account for the time taken to find a plan, given that searching begins from current wall-clock time *t_{c},* but the plan will not be executed until the plan is found at a later wall-clock time *tₑ* > *t_{c}*. To account for this time delay the algorithm uses two estimations: expected amount of total planning time T*ₚ* and the expected time to conduct one planning step T*ₑ*. To start the planning process, the planner moves to the expected time at which the planner can start to execute the eventually found plan: *tₚ* = *t_{c}* + T*ₚ* 512. The planner also "freezes" all tokens in all timelines before *tₚ* and removes them from the initial timeline set 514. This step simplifies the token and timeline representation and also reduces their sizes. Like the planner in Figure 4, it systematically searches for the final plan by maintaining a queue SQ of plan states, each containing a potential incomplete plan P and the corresponding timeline containing tokens representing actions in P. SQ is initialized with an empty plan at time *tₚ* and the simplified timelines 516. The planner then picks the best state s = <TLₛ,Pₛ,tₛ> from the queue according to the objective function of the planning process in 518. If, in 520, the state contains a consistent plan Pₛ, then it is returned for execution 532. If not, the planner then finds actions that are candidates to extend the current plan *Pₛ* leading from the initial state to *s* using the following procedure: For each action *a* , the FSS planner moves forward in time from the current state's time stamp *tₛ* until it find an earliest time *tₐ* ≥ *t_{c}* that if *a* executes ar *tₐ* then all new tokens added will not make the timelines inconsistent. Any action *tₐ* for which there is a consistent execution time *tₐ*, the action is added to an action (or candidate) set 522.

Next, the planner selects a subset of promising actions 524, removing irrelevant actions (i.e., actions that do not lead towards a goal). There are several methods to implement this step, the simplest approaches being selecting all applicable actions or selecting only a single best action according to a heuristic function. For each action a in the candidate set, tokens are then created to represent the conditions and effects of action a and are added to the timeline set for the plan 526. The actions are added to the plan at the wall-clock time *tₐ* found in the previous step and the resulting state containing the newly created timelines and plan are added to the state queue (SQ) 528.

Next, to create one additional resulting state, the time-stamp is moved forward 530. This is a special action that helps to move the state time-stamp forward closer to the goal. When moving the time-stamp forward, the function sets a newer lower-bound on the future action execution time, which: (1) limits the branching factor; (2) simplifies the timelines by removing all tokens before the new time-stamp; and (3) reduces the interactions between tokens and future actions, leading to shorter heuristic computation time. Then the process moves from 530 back to 520.

Given that the plan returned by the FSS algorithm has all actions and tokens tied to some fixed wall-clock times, the FSS planning algorithm may not return the plan in which all actions start at the earliest possible time. As an optional step, it is possible to convert from the "fixed-time" plan into a plan with temporal ordering between tokens and actions 562. This can be accomplished using an extension of the approach specified in Do, M., & Kambhampati, S., "Improving the Temporal Flexibility of Position Constrained Metric Temporal Plans", on Proceeding of the 13th International Conference on Automated Planning and Scheduling (ICAPS), 2003.

Turning to Algorithm 2 below, the above concepts are detailed in pseudocode. In Algorithm 2, it may be seen that lines 8-21 mimic the main steps in general Algorithm 1 that use a best-first-search framework (with lines 20-21 providing the being option of converting from fixed-time tokens to tokens with temporal constraints. Corresponding to the discussion of Figure 5 and Algorithm 2, the successor generating routines are restated in the following functions:
(i) *Applicable* (lines 25-30): for the current state s, this function finds actions that are candidates to extend the current plan *Pₛ* leading from the initial state to s. For each action a, the FSS planner moves forward in time from the current state's time stamp *tₛ* until it finds an earliest time *tₐ* ≥ *t_{c}* that if a executes at *tₐ* then all new tokens added will not make the timelines inconsistent. Any action *tₐ* has a consistent execution time *tₐ* is added to the candidate set.
(ii) Apply (lines 33-37): the planner only selects a subset of candidate actions (line 17) because normally there can be many applicable but irrelevant actions (i.e., do not lead to some good directions toward goals). It then generates successors by creating tokens related to an action's conditions and effects and adds them to the current tokens. Also the action at the wall-clock time *tₐ* found in the previous step is added to the overall plan leading to the new state.
(iii) AdvanceTime (lines 39-44): this is a special action that helps move the state time-stamp forward (*i.e.,* closer to the goal). When moving the time-stamp forward, it basically sets the newer lower-bound on the future action execution time and thus: (1) limits the branching factors; (2) simplifies the timelines (*i.e.,* removes all tokens finished before the new time-stamp); and (3) reduces the interactions between tokens and future actions, leading to a shorter heuristic computation time.

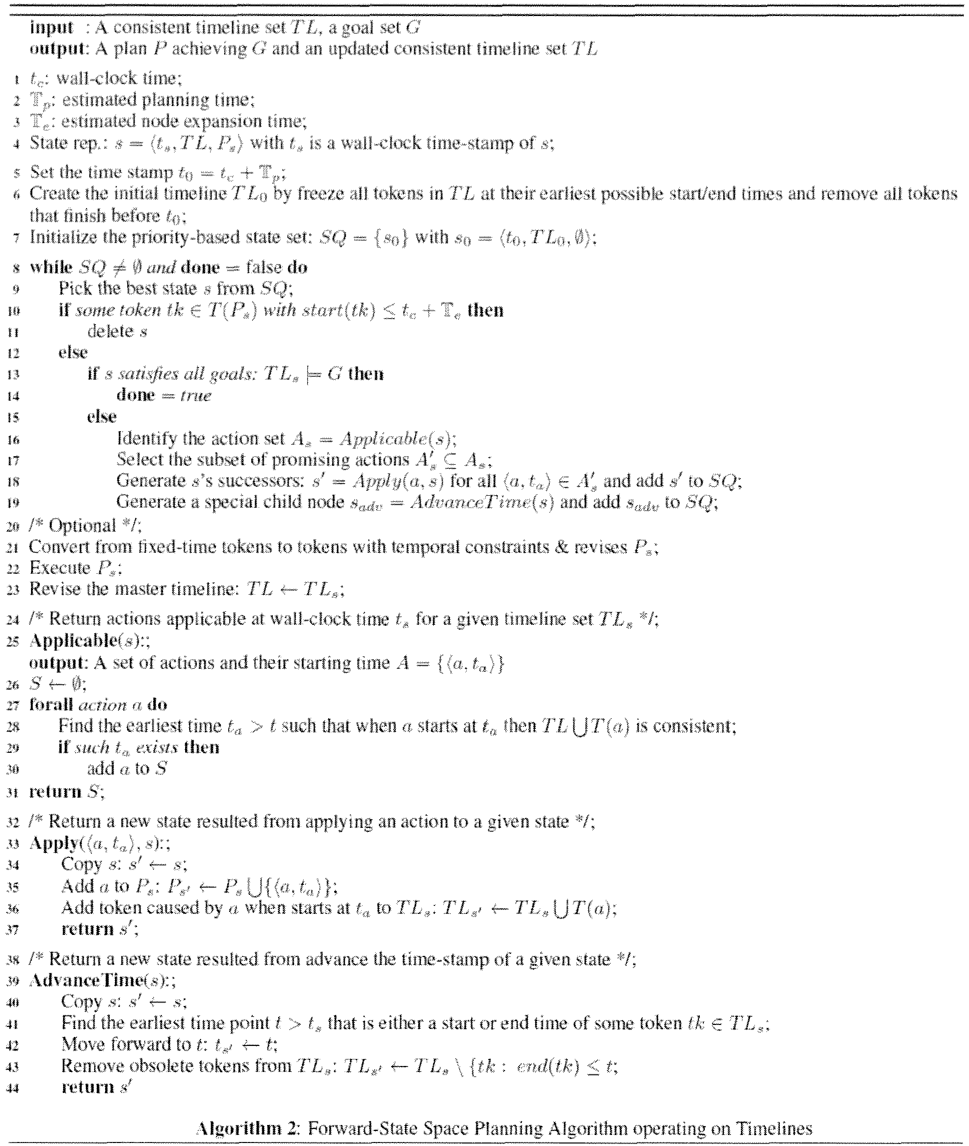

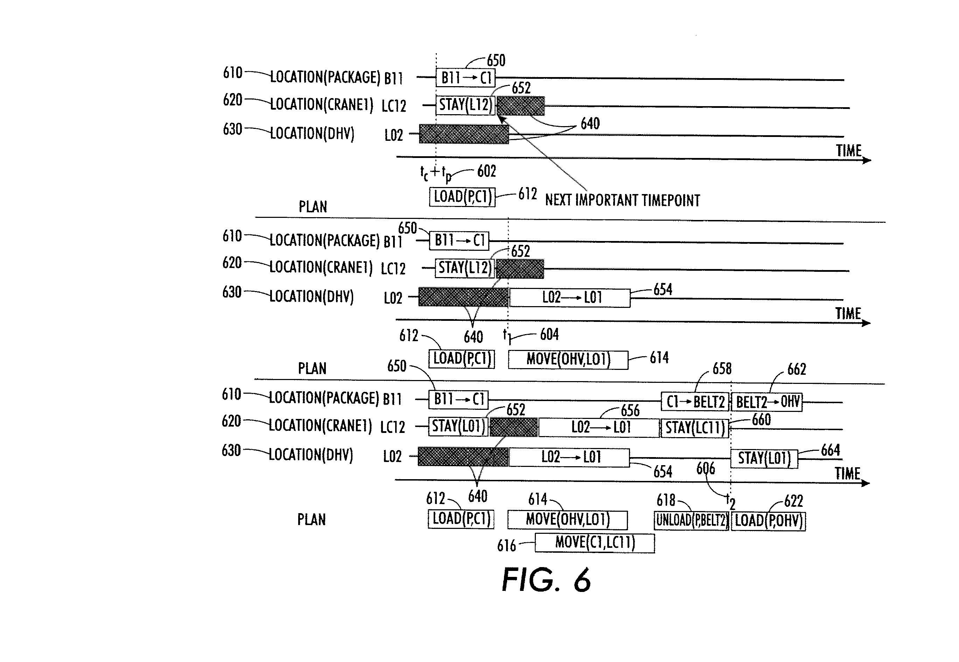

Going back to the example shown in Figure 2, Figure 6 shows several steps leading to the determination of the final plan. Displaying all the steps the planner goes through to determine the final plan in Figure 2 is too complicated. Therefore, we will assume a simpler goal of moving the package from *B*1₁ to the *OHV.* Timelines for only three variables are shown, *v*₁*, v*₂, and *v*₃ representing the locations of the *package, Crane*1 and *OHV* respectively. In the timelines for *v*₁ 610, *v*₂ 620, and *v*₃ 630, tokens represented by solid rectangles 640 are from a previous online planning period. Tokens created during the current planning process should not overlap with tokens from previous planning periods. We start by setting the start time equal to *t_{c}* + *tₚ* 602, and the planner begins by adding an action of loading the package into *Crane*1 612 at that time instance. This action addition creates two fixed-time tokens 650, 652 on the timelines for *v*₁ 610 and *v*₂ 620. We then apply the AdvanceTime action several times to reach t₁ 604 and apply the second action to move the *OHV* to *L*0₁ 614, which adds one token 654 to the timeline of *v*₃ 630. After several steps of adding regular actions (e.g., *Move* (*Crane* ;*LC*1₁) 616; *Unload*(*P*;*Belt*₂) 618) and several AdvanceTime actions 606, we apply the action of loading the package into *OHV* 622. At this time, all timelines are consistent and all goals are achieved so planning is terminated.

Attention is now turned to a partial-order planner, implemented on a timeline according to the present disclosure. It is to be noted here that while this disclosure uses the term partial-order planner and such a term is used in the literature, there are significant differences, particularly as this partial-order-planner is designed to operate on timelines. It is noted an FSS planner finds a plan by moving forward through a sequence of consistent timelines until a given timeline set satisfies all goals. Conversely, a partial order planner searches backward from the goals. The partial order planner creates special tokens representing the goals and has an objective of creating enough tokens through adding actions to plan to support all in the set of unsupported tokens, which initially contains only special goal tokens. So the partial order planner may start with an inconsistent timeline set and systematically refine it until it becomes consistent. Instead of finding *Applicable* actions as in the FSS planner, the partial order finds *Relevant* actions. *Relevant* actions are those actions that can contribute tokens that support currently un-supported tokens.

The flow diagram 700 in Figure 7 shows the steps performed by the partial order planner in determining a consistent plan. The partial order planner takes as an input a consistent timeline and goal set. The planner starts with an empty plan 710 and adds special tokens representing the goals to the end of the timeline 714. Like the planner in Figure 4, it systematically searches for the final plan by maintaining a queue SQ of plan states, each containing a potential incomplete plan P and the corresponding timeline containing tokens representing actions in P. SQ is initialized with an empty plan at time *tₚ* and the simplified timelines 716. The planner then picks the best state s = <TLₛ,Pₛ,> from the queue according to the objective function of the planning process in 718. If the state contains a consistent plan Pₛ, then it is returned for execution. If the state is consistent 720, then the temporal order between actions in the plan are setup 732. The execution time for all actions in the plan is determined such that all actions are consistent with the temporal constraints 734. Finally, the plan is executed 736. If, in 720, the state picked doesn't contain a consistent plan, the planner identifies all relevant actions in the plan that contribute tokens that support currently unsupported tokens 722. A subset of promising actions from these relevant actions are chosen 724. For each new action, tokens corresponding to that action's conditions and effects are then added to the timelines 726. New actions are then added to the plan and the state set is updated 728, and the process is repeated from 718. There is no fixed starting time for all actions and tokens in the partial order planner, because their start/end times are represented by floating time points.

Further describing the above flow diagram, shown below is the pseudocode of Algorithm 3 corresponding to the described partial order planning (POP) algorithm.

The main loop of the POP algorithm uses a search to find the plan (lines 6-16) which is similar to Algorithm 1 and Algorithm 2. However, particular differences between this POP algorithm and the FSS algorithm are:
(i) Given that the algorithm doesn't find fixed-time plan (with all actions associated with some wall-clock time), there is no need to estimate planning time T*ₚ* or expansion time Tₑ.
(ii) The planner searches backward from the goals. For that, it creates special tokens representing the goals (line 3-5) and the planner's objective is to create enough tokens through action addition so that those goal tokens are all eventually supported.
(iii) Instead of finding Applicable actions as in the FSS algorithm, we go backward and find Relevant actions, which can contribute some tokens that can support some currently un-supported tokens (line 14, 22-27).
(iv) There is two-level branching: (1) over actions that are deemed relevant; and (2) over token ordering where the new tokens introduced by the newly added actions can be added in the respective timelines.
(v) There is no fixed starting time for all actions and tokens but their start/end times are represented by floating time points. There is thus no need for an optional post-processing process to convert from a fixed-time to flexible time plan as in the FSS algorithm.

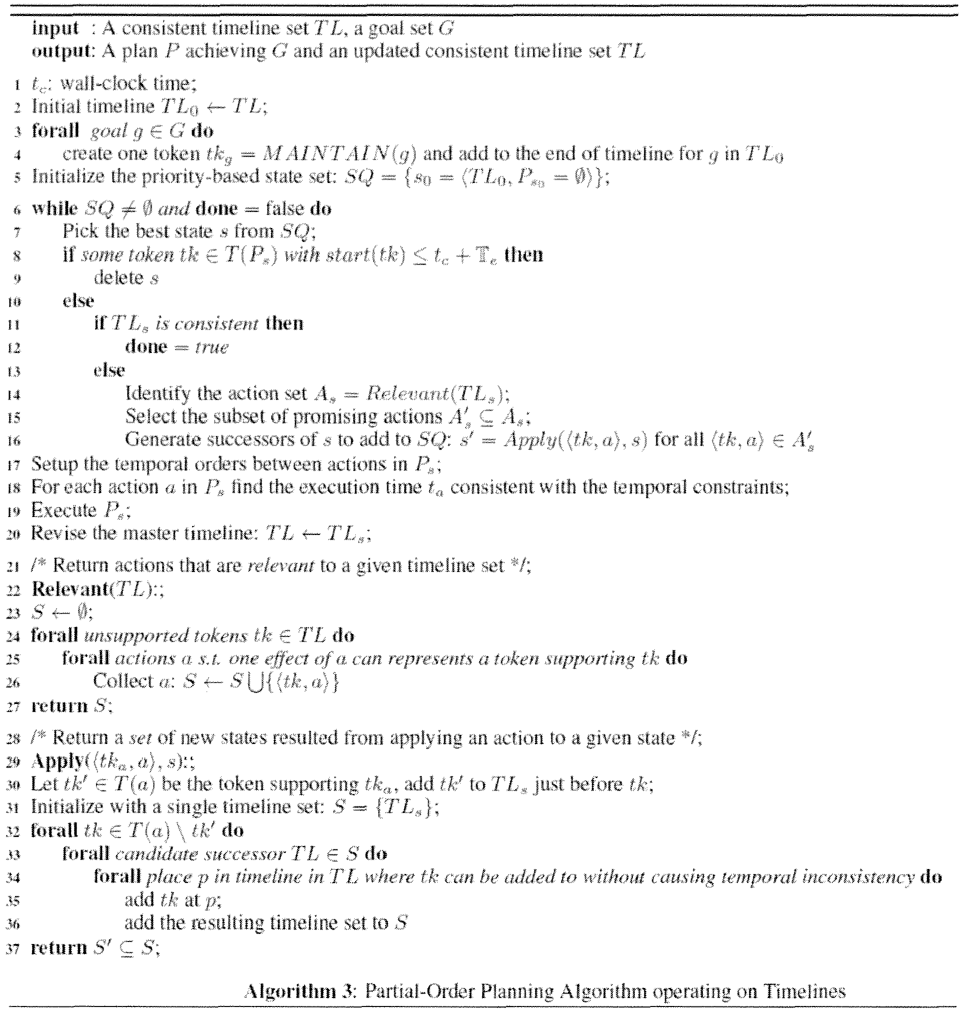

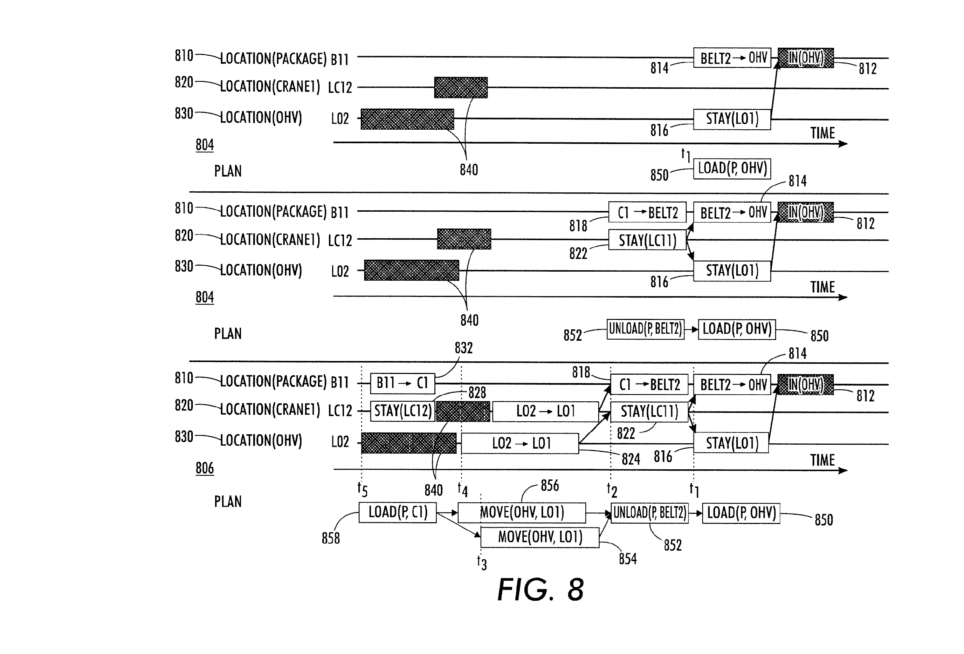

Figure 8 shows several steps 802, 804, 806 of the partial order planner in finding the plan with the same set of actions as the FSS algorithm shown in Figure 6. Timelines for three variables are shown, *v*₁ 810, *v*₂ 820, and *v*₃ 830 representing the locations of the *package, Crane*1 and *OHV* respectively. In the timelines for *v*₁ 810, *v*₂ 820, and *v*₃ 830, tokens represented by solid rectangles 840 are from a previous online planning period. The planner starts by creating a special token *v*₁ = *In*(*OHV*) 812 at the end of the timeline for *v*₁ 810. The action *Load*(*P,OHV*) 850 is then added to the plan because it adds a token that support *v*₁ = *In*(*OHV*) 812, which was previously unsupported. *Load*(*P,OHV*) 850 causes two tokens 814, 816 to be added to the timeline. In the next step 806 the action *Unload*(*P,Belt₂*) 852 is added which causes two tokens 818, 822 to be added to the timeline. Appropriate temporal orderings are also added between related time points. The partial order planner continues to add actions to support un-supported tokens until the timelines are consistent and the final plan is found. In the final plan 806 three additional actions 854, 856, 858 have been added since step 804, creating four additional actions 824, 826, 828, 832.

The partial order planner and FSS planner include various attributes. The fixed-time and the association of a time-stamp for each search state during the planning process of the FSS planner leads to:
(i) Smaller state representation: (1) any token ends before the time-stamp can be removed from consideration; (2) no order between different tokens needs to be stored, as they are implied by the fixed start/end time of all tokens.
(ii) Lower branching factor: each applicable action generate exactly one successor,
allowing the FSS planner to quickly find valid plans.

Attributes of the POP-style algorithm include:
(i) Does not require the estimation of the expected total planning time and expected expansion time.
(ii) Allows branching rules that do not rule out any valid solutions.

The foregoing has described a timeline-based planning approach that operates by maintaining timelines that capture how the values of system variables change over time. The planner builds and maintains consistent plans by adding tokens to affected timelines, each token representing different types of operation and/or change affecting the variable represented by that timeline. The application supports many types of variables and various operations on those variables through different tokens, all of which can be shared between different planning episodes for different goals. Given that different planning algorithms are more suitable for different applications, the overall framework is designed to allow multiple planning algorithms to be used for a given task. In turn, different planning algorithms can call different search algorithms and constraint solvers (e.g., temporal reasoning, uncertainty reasoning, etc.) to solve the planning or replanning tasks.

The disclosed embodiments provide examples of improved solutions to the problems noted in the above Background discussion and the art cited therein. There is shown in these examples an improved online continual automated planning framework based on timelines. In one embodiment, a timeline-based continual on-line planning and scheduling method for determination of a sequence of actions that when executed from a known initial state achieves all pre-defined goals. The method is performed by a planner residing within a computer control system having a memory storage. The planner builds and maintains a consistent valid plan by adding tokens to affected timelines. The plan is defined by a sequence of actions and each timeline represents a variable. All variables and their values represent a state and each timeline comprises the current value of the variable and a set of tokens representing constraints and changes on the value of that variable over time. A token represents a condition or effect of an action affecting the variable and tokens are added to timelines due to actions in the plan that affect the value of different variables. Each token has an earliest time point and a latest time point that the action can occur. The planner takes as an input a goal set and a consistent set of timelines representing all operations occurring after the current wall-clock time that affect any state variables.

## Claims

1. A timeline-based continual on-line planning and scheduling method for determination of a sequence of actions that when executed from a known initial state achieves all pre-defined goals, wherein the method is performed by a planner residing within a computer control system having a memory storage, wherein the planner utilizes a partial order planning algorithm to build and maintain a consistent valid plan by adding tokens to affected timelines, wherein:
the plan is defined by a sequence of actions;
each timeline represents a variable;
each variable has a state that change over time;
each timeline comprises the current value of the variable and a set of tokens;
wherein a token represents an action's condition or effect affecting the variable and tokens are added to timelines due to actions in the plan that affect the value of the variable;
each token has an earliest time point and a latest time point; and
the planner taking as an input a goal set and a consistent set of timelines representing all operations occurring after the current wall-clock time that affect any state variables.

2. The method of claim 1, wherein the plan is valid if:
the plan achieves the desired goal or set of goals, wherein:
the plan represented by the set of timelines achieves the desired goal if at the end the timelines the end value of the last token matches the goal; and
the set of goals is achieved when for all goals in the goal set the end value of the last token of a consistent timeline represent the goal variable satisfies the goal;
all tokens caused by the actions in the plan are able to start after the wall-clock time when the plan is found; and
adding all tokens caused by the plan does not cause any inconsistencies, wherein the plan is consistent if the set of timelines for all variables in the plan are:
value consistent, wherein the timeline is value consistent if consecutive tokens on the same timeline make up a consistent sequence of changes, wherein the end value of a given token matches with the start value of the next token; and
temporal consistent, wherein the timeline is temporal consistent if all tokens that are added to the timeline do not cause the value of a variable to conflict the value of the same variable in another timeline.

3. The method of claim 1 or claim 2, wherein:
each token is represented by a start time point and an end time point, a start value of the variable for discrete or continuous variables or an upper and lower bounds on the start value for continuous variables, and a change operation specifying how the variable value changes during the token duration;
there is a temporal relation between tokens that represent a condition to or effect of the same action or represent a condition to or effect of actions that are related to one another, wherein related actions are actions that are dependent upon the results of one another.

4. The method of any of the preceding claims, wherein the planner determines a plan by starting with an empty plan, the empty plan is inputted into the partial order planning algorithm, wherein the partial order planning algorithm:
creates special tokens representing the goals;
determines relevant actions that contribute tokens that support currently unsupported tokens; and
adding relevant actions to the plan until all of the special goal tokens are supported.

5. The method of any of the preceding claims, wherein the planner creates special tokens representing the goal set, initializes an empty plan set and inputs the empty plan set into the solver, wherein the solver:
adds actions to the plan;
adds tokens caused by the actions to the corresponding timeline;
selects relevant actions that contribute tokens that support currently unsupported tokens;
selects promising actions from the set of relevant actions using an objective function;
if all tokens including the special goal tokens are supported then the plan is executed, if all tokens including the special goal tokens are not supported then the states resulting from adding the new promising actions are inputted back into the solver.

6. An apparatus comprising:
a digital processing device configured to perform on-line partial order planning by a planner residing on the digital processing device, wherein the on-line partial order planning includes:
starting with an inconsistent set of timelines; and
systematically refining the timeline set until the timeline set becomes consistent.

7. Apparatus according to claim 6 adapted to carry out a method according to any of claims 1 to 5.

8. An on-line partial order planning method comprising:
representing variables in an environment for which a plan is being developed in the form of a plurality of timelines formed as a set of timelines;
starting with the set of timelines as an inconsistent set of timelines; and
systematically refining the timelines until the timeline set becomes consistent.

9. The method of claim 8, further including searching backward from goals, creating goal tokens representing the goal of the plan.

10. The method of claim 9, further including creating a sufficient number of tokens through addition of actions to support all unsupported tokens including all the goal tokens.

11. The method of claim 10, wherein the actions are relevant actions which support some currently un-supported tokens.

12. The method of any of claims 8 to 11, further including performing two level branching including branching, (i) over actions that are deemed relevant, and (ii) over token ordering where new tokens introduced by newly added actions are added in respective timelines.

13. The method of claims 8 to 12, wherein there is no fixed starting time of the actions and tokens, and the actions and the tokens start/end times are represented by floating time points.
